# EUROPEAN PATENT SPECIFICATION

(11) **EP 1 217 478 B1**
(45) Date of publication and mention of the grant of the patent: **10.12.2003**
(21) Application number: 00962929.6
(22) Date of filing: 28.09.2000
(51) Int. Cl.: G05B 19/05, G06F 3/14, G05B 23/00

(54) **SYSTEM FOR DESIGNING VISUAL INFORMATION TO BE DISPLAYED ON MONITOR UNIT USED IN COMBINATION WITH PROGRAMMABLE CONTROLLER**
VORRICHTUNG ZUM ENTWURF VISUELLER INFORMATIONEN, WELCHE AUF EINER MONITOREINHEIT WIEDERGEGEBEN WERDEN, DIE MIT EINER PROGRAMMIERBAREN STEUERUNG IN VERBINDUNG STEHT
SYSTEME DE CONCEPTION D'INFORMATION VISUELLE A AFFICHER SUR UNE UNITE DE CONTROLE UTILISEE EN COMBINAISON AVEC UN AUTOMATE PROGRAMMABLE

(30) Priority: 30.09.1999 JP 28078799
(43) Date of publication of application: 26.06.2002
(73) Proprietor: Matsushita Electric Works, Ltd., Kadoma-shi, Osaka-fu 571-8686 (JP)
(72) Inventor: KOIKE, Sadamitsu, Hirakata-shi, Osaka 573-1193 (JP); NANBOKU, Masato, Hirakata-shi, Osaka 573-1105 (JP); UEMATSU, Eiichi, Neyagawa-shi, Osaka 572-0029 (JP); YOSHIYASU, Toshiaki, Hirakata-shi, Osaka 573-0018 (JP); ONO, Koji, Katano-shi, Osaka 576-0034 (JP); IRIBE, Kyosuke, Hirakata-shi, Osaka 573-0066 (JP); OKADA, Hiroshi, Yawata-shi, Kyoto 614-8377 (JP); YOSHIMOTO, Yoshiharu, Hirakata-shi, Osaka 573-0018 (JP); NISHI, Teruma, Hirakata-shi, Osaka 573-1136 (JP)
(74) Representative: Appelt, Christian W.
(86) International application number: PCT/JP00/06712
(87) International publication number: WO 01/023970

(56) References cited:
- EP-A- 0 575 147
- EP-A- 0 834 801
- JP-A- 7 055 968
- JP-A- 8 044 409
- JP-A- 8 156 363
- JP-A- 8 166 785
- JP-A- 9 207 393
- JP-A- 10 340 109
- US-A- 4 763 356
- COCKRELL L ET AL: "Selecting a man/machine interface for a PLC based process control system (cement industry)" CEMENT INDUSTRY TECHNICAL CONFERENCE, 1991. XXXIII., RECORD OF CONFERENCE PAPERS. IEEE MEXICO CITY, MEXICO 21-23 MAY 1991, NEW YORK, NY, USA,IEEE, US, 21 May 1991 (1991-05-21), pages 65-98, XP010050523 ISBN: 0-7803-0142-0
- COLLINGS P ET AL: "Man-machine interfaces, trends and needs" PULP AND PAPER INDUSTRY TECHNICAL CONFERENCE, 1995., CONFERENCE RECORD OF 1995 ANNUAL VANCOUVER, BC, CANADA 12-16 JUNE 1995, NEW YORK, NY, USA,IEEE, 12 June 1995 (1995-06-12), pages 1-16, XP010140633 ISBN: 0-7803-2418-8

## Description

### FIELD OF THE INVENTION

The present invention relates to a system for designing visual information on a monitor unit utilized in combination with a programmable logic controller (PLC).

### BACKGROUND ART

A monitor unit has been utilized in combination with a programmable logic controller (PLC) in order to monitor a task performed by I/O devices connected to and controlled by the PLC. The monitor unit includes a display for displaying visual information prepared for informing the task being performed, a controller section for controlling to display the visual information, and a memory for storing the visual information to be selectively reproduced on the display. In order to design the visual information, an image design tool is provided for creating a source display code of the visual information. After completing the design of the visual information on the tool, the source display code is transferred to the monitor unit where the source display code is translated into a corresponding bitmapped image for reproduction of the visual information on the display. Normally, the visual information created on the tool includes a combination of characters and graphic images. The characters are realized as vector fonts by the image design tool or draw program with the use of a font file provided on a computer running the draw program, while the graphic images are realized in a vector-oriented format defined by the program. Therefore, the monitor unit is required to have additional character ROM for translating the characters into the corresponding bitmapped image as well as to have a capability of translating the graphic images in the vector-oriented format into the corresponding bitmapped image. The more the intended visual information becomes sophisticated with the inclusion of elaborate graphic images and the characters of different font sizes, the more the monitor unit is required to have the translation capability for rapid reproduction of the visual information on the display. To meet this requirement, the prior monitor unit has to incorporate a high speed CPU and a graphic processor, and therefore is realized at a considerably high cost.

The paper of P. Collings et al. "Man-machine interfaces, trends and needs", Pulp and Paper Industry Technical Conference, 1995, Vancouver, Canada, 12-16 June, Pages 1-16 relates to a system for designing visual information comprising a Man-machine interface connected to a PLC.

### DISCLOSURE OF THE INVENTION

In view of the above insufficiency, the present invention has been achieved to provide a system for designing visual information reproduced on a monitor unit according to claim 1. The present invention enables the use of the monitor unit manufactured at a reduced cost but assures rapid reproduction of the intended visual information. The monitor unit is utilized in combination with a programmable logic controller (PLC) for monitoring a task to be performed by I/O devices managed by the PLC. The PLC executes a program for controlling the I/O device connected to the PLC. The monitor unit includes a display, a controller section, and a memory. The system includes an image design tool operating on a personal computer for creating a source display code of the visual information to be reproduced on the display. The characterizing feature of the present invention resides in that the image design tool has a conversion means which translates the source display code into a corresponding bitmapped image and exports the bitmapped image to the monitor unit for immediate reproduction of the visual information on the display. Consequently, the monitor unit can be dispensed with a costly component of translating the source image code into the bitmapped image, yet effecting rapid reproduction of the visual information on the display directly from the bitmapped image transferred from the image design tool.

Accordingly, it is a primary object of the present invention to provide a system for designing the visual information to be displayed on the monitor unit which allows the use of the less costly monitor unit but assures high speed reproduction of the visual information on the display.

In a preferred embodiment, the monitor unit is defined by a touch screen unit having a touch screen switch which generates a switch output to the PLC in response to a user's action of touching a particular area on the display. That is, the monitor unit, i.e., the touch screen unit is utilized in combination with the PLC also as an input terminal for entry of a specific instruction to be carried out by the PLC for control of the device managed by the PLC. In this connection, the image design tool includes a function of creating a switch control code for defining the switch output, and a transfer function of transferring the switch control code to the memory of the touch screen unit. The switch control code is processed by the controller section of the touch screen unit to associate the switch output to a particular function of the PLC for control of the devices connected to the PLC.

Preferably, the image design tool is programmed to transfer the source display code together with the bitmapped image thereof to the memory of the monitor unit. The image design tool is also programmed to have a retrieve function of retrieving the source display code as well as the switch control code back from the memory of the monitor unit for modification of the visual information and the switch control code at the image design tool. That is, all the information or data displayed or processed by the monitor unit can be backed-up within the monitor unit to be accessible by the image design tool. Therefore, the modification of the visual information as well as the switch control code can be made without having to back up the data in another system, which is another object of the present invention.

Further, the present invention provides a scheme of rapid reproduction of a graphic image defined by a rectangular frame on the display. The rectangular frame is frequently utilized to be included in the visual information for highlighting a particular message written in the visual information. The image design tool gives a screen area for drawing the visual information therein. The screen area is divided into a plurality of unit zones extending in parallel with each other with each unit zone and having a length and a unit width defined by a fixed number of dots. The image design tool includes a means of drawing the rectangular frame which is written in the source display code and is translated into a corresponding bitmapped image for reproduction on the display. The image design tool is also equipped with a reshaping means of resizing the bitmapped image of the rectangular frame into a modified rectangular frame having a width equal to an integer multiple of the unit width, dividing the modified rectangular frame into one or more segments having the unit width, and transferring the one or more segments to the memory of the monitor unit or touch screen unit so as to be recombined on the display for reproduction of the bitmapped image of the modified bitmapped rectangular frame. Thus, the controller section of the monitor unit can be easy to perform a rapid reproduction of the modified rectangular frame on the display, which is a further object of the present invention.

Preferably, the rectangular frame is defined as corresponding to a touch sensitive part of the touch screen switch for facilitating to prompt the entry of the instruction.

In a preferred embodiment, the image design tool has a capability of selecting a particular linguistic code from a set of different linguistic codes so as to create the visual information by using a string of characters according to the selected linguistic code. The tool also has a capability of including an identifier of identifying the selected linguistic code into the source display code such that, when the source display code is retrieved from the memory of the monitor unit into the image design tool, the string of the characters of the selected linguistic code is reproduced on the image design tool. Thus, the characters of any linguistic codes employed for the visual information can be successfully replicated at the image design tool without causing character garbling.

The memory of the monitor unit may be configured to include a virtual image area and an actual image area. The virtual image area has a size greater than a screen size given to the display and is provided for loading the bitmapped image to give a virtual image of the bitmapped image therein. The actual image area has a size equal to the screen size of the display and is provided for trimming the virtual image from the virtual image area into an actual image fitted in the screen size and stores the actual image. The actual image is then transferred by the CPU of the monitor unit to the display for reproduction of the visual information on the display. Thus, only the image within the screen size can be simply transferred from the memory without resorting to laborious procedure of checking over-reached portion of the image and making proportional resizing of the entire image, thereby enabling immediate reproduction of the visual information on the display.

### BRIEF DESCRIPTION OF THE DRAWINGS

FIG. 1 shows a diagram showing a system for designing visual information on a monitor unit in accordance with a preferred embodiment of he present invention;
FIGS. 2A to 2E are views showing different pages displayed on the monitor unit realized by a touch screen unit;;
FIG. 3 is a schematic diagram showing a configuration of the touch screen unit;
FIG. 4 is a view explaining the transfer of data between an image design tool and the touch screen unit;
FIG. 5A illustrates one particular page which is designed to be displayed on the touch screen unit;
FIG. 5B is a view showing the content of data transferred from the image design tool to a memory of the touch screen unit;
FIG. 6A is a view showing rectangular switch frames included in an image created at the image design tool; and
FIGS. 6B to 6D show a scheme of resizing the rectangular switch frame in the image for easy handling at the touch screen unit.

### BEST MODE FOR CARRYING OUT THE INVENTION

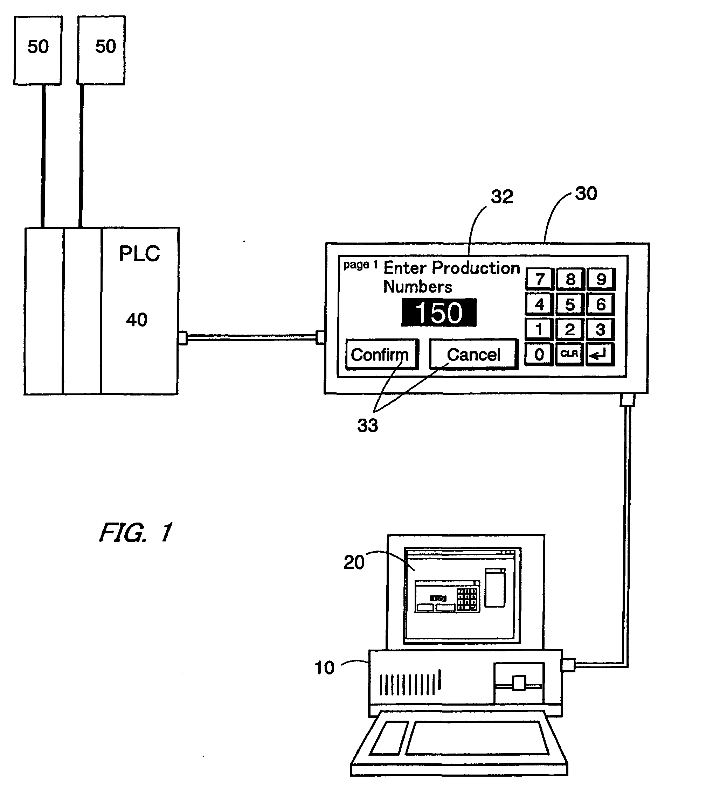

Referring now to FIG. 1, there is shown a system for designing visual information on a monitor unit **30** in accordance with the present invention. The monitor unit **30** is realized by a touch screen unit which is utilized in combination with a programmable logic controller (PLC) **40** as a monitor of displaying information of a task being performed by I/O devices **50** managed by PLC **40** and also as an input terminal for entry of specific instructions to be carried out by PLC **40** for control of I/O devices **50.** PLC **40** executes its own program for control of the I/O devices **50.** For easy understanding of present invention, it is illustrated in the specification and drawings that PLC **40** manages the I/O devices **50** for continuous production of parts as one typical application of PLC **40.** The monitor unit **30** (hereinafter referred to as the touch screen unit) is therefore programmed to provide visual information associated with the production of the parts so that a user is informed of the status of the parts production as well as that the user is guided by the visual information to enter the specific instruction. The touch screen unit **30** includes a touch screen switch **33** (hereinafter referred to simply as touch switch) which provides switch outputs In accordance with the entry of the instructions for carrying out particular functions at PLC **40.**

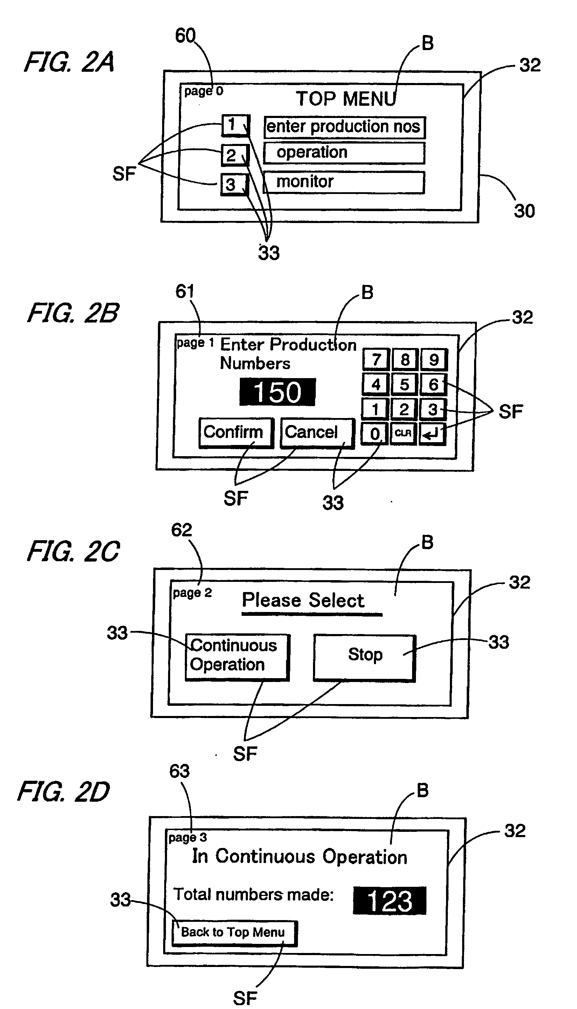

In order to create the visual information and switch control code which is included in the visual information for allocating the switch outputs to the particular functions at PLC **40,** the system includes an image design tool **20,** i.e., a draw program which runs on a personal computer **10.** As shown in FIGS. 2A to 2D, the visual information to be created at the image design tool are classified into four pages, i.e., a top menu page **60,** a first selected page **61** for entry of intended production numbers of the parts, a second page **62** for entry of actions, and a third page **63** for display status of the operation.

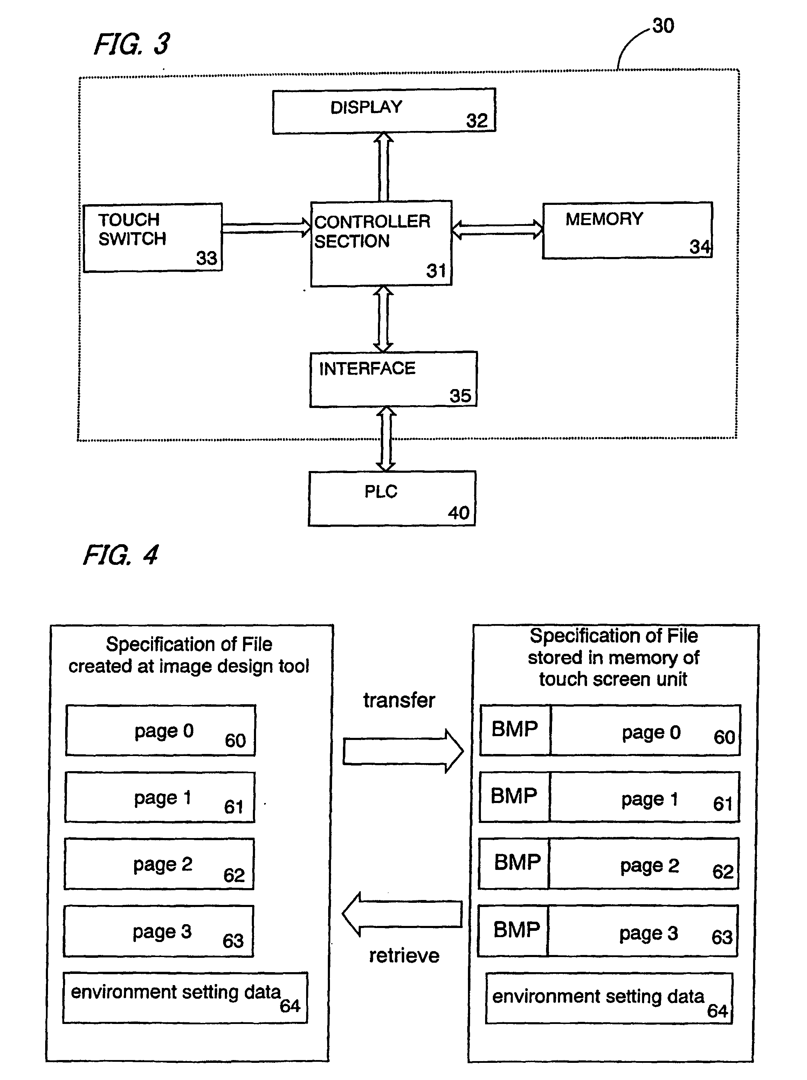

As shown in FIG. 3, the touch screen unit **30** includes a controller section **31** including a CPU, a display **32,** the touch switch **33,** a memory **34,** and an interface **35.** The display **32** is in the form of a liquid crystal display (LCD) having a screen and including a driver for reproduction of the visual information as bitmapped image on the screen by the controller section **31**. The touch switch **33** has an array of touch sensitive transparent areas covering the screen and each providing the switch output in response to being touched by the user. The memory **34** stores the visual information and the switch control code created by the image design tool **20.** The interface **35** is provided for transmission of the visual information and the switch control data between the memory **34** and the image design tool **20** and also for transmission of control data between the controller section **31** and PLC **40**.

The visual information created at the image design tool **20** is composed of base images **B** and rectangular switch frames **SF** overlayed on the base image. The base image is a background image appearing on each of the pages **60** to **63** and includes a string of characters and a graphic image such as a rectangular and a line. As shown in FIGS. 2A to 2D, the switch frames **SF,** which are provided at the pages **60** to **63** and illustrated with shadow lines, give user interface switches. In addition to drawing the switch frames, the image design tool has a function of determining switch actions of the switch frames. The switch actions includes, for example, switching of the pages on the display and designation the instruction to be transferred to PLC **40** for execution of particular routines of the program. In addition, the image design tool **20** sets an environment data **64** such as a screen size and a backlight screen color of the display **32.** As shown in FIG. 4, the visual information (page 0, page 1, page 2, and page 3) including the switch control code for each page as well as the environment data **64** are created at the image design tool **20** for transfer to the memory **34** of the touch sensor unit **30.** The visual information is created as a source display code which is to be translated into a corresponding bitmapped image for reproduction of the visual information on the display **32.** Also, the switch control code is created as a source code which is translated at the controller section **31** into a suitable format to be executed thereat. Thus, each of pages **60** to **62** is defined by a combination of the source display code of the visual information and the source code of the switch control code.

Further, the image design tool **20** is programmed to have a conversion function of translating the source display code into the bitmapped image and exporting the bitmapped image as being attached to the source display code (page 0, page 1, page 2, and page 3) for each page, as shown in FIG. 4. The touch screen unit **30** operates to read the bitmapped image for immediate reproduction on the display **32** and to translate the switch control code for execution of the switch action. Also, the image design tool **20** is programmed to have a retrieve function of retrieving the source display code and the switch control code back from the memory **34** for modification of the visual information and the switch control code at the image design tool **20.**

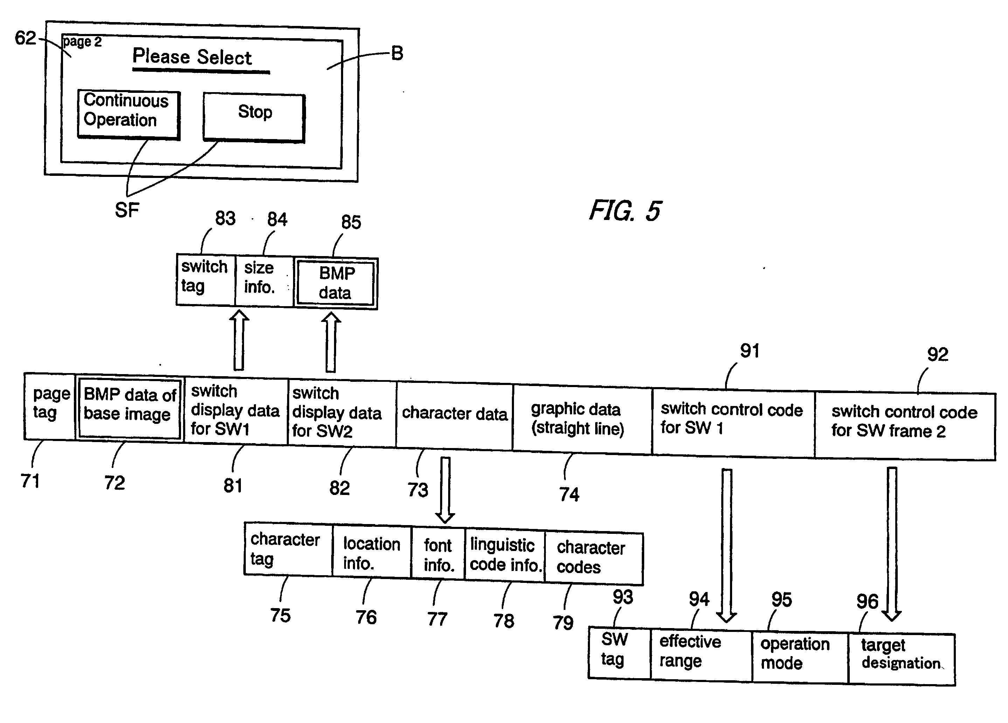

Now more detailed explanation will be made as to the contents of the visual information with reference to FIGS. 5A and 5B. FIG 5A shows the visual information of page **62,** while FIG. 5B shows the contents of the visual information of page **62** and the associated switch control code. The page **62** includes the base image with the strings of characters "Please Select" and "page 2" and the graphic line, i.e., the underline below the string "Please Select", and two rectangular switch frames **SF** labeled as "Continuous Operation" and "Stop" and defining the first and second switches, respectively. Each rectangular switch frame **SF** includes a graphic image of rectangular and a string of characters "Continuous Operation" or "Stop", and has the switch control code embedded behind the rectangular frames. The characters for the base image as well as the switch frames are realized by vector fonts with the use of a font file equipped on the computer running the image design tool, while the graphic images for the base image as well as the switch frames are realized in vector-oriented format of the image design tool. The visual information thus including the characters and the graphic images for page **62** are translated at the image design tool **20** into the corresponding bitmapped image (BMP) which are appended to the source code of the visual information and the switch control code. That is, as shown in FIG. 5B, the data of page **62** is mainly composed of a page tag **71** specifying page **62,** bitmapped image (BMP) **72** of the base image, switch display data **81** of the first switch, switch display data **82** of the second switch, character data **73** for the characters of the base image, graphic data **74** for the graphic image of the base image, switch control code **91** of the first switch, and switch control code **92** of the second switch.

Each of the switch display data **81** and **82** includes a switch tag **83** specifying the corresponding switch, size information **84** defining the size of the corresponding switch frame, and bitmapped image (BMP) **85** of the corresponding switch frame. The character data **73** includes a character tag **75** specifying the character information, locating information **76** designating locations of the characters, font information **77** for fonts utilized for the characters, linguistic code information **78** specifying a particular linguistic code or a character set utilized for the characters, and character codes **79** defined by the linguistic code to represent the characters utilized. In this connection, the image design tool **20** has a capability of selecting a particular linguistic code from a set of different linguistic codes so as to include the string of characters according to the selected linguistic code, and of including the selected linguistic code into the source display code. Whereby, when the source display code is retrieved from the memory **34** of the touch screen unit **30** to the image design tool **20,** the string of the characters of the selected linguistic code can be successfully reproduced on the image design tool **20.**

Each of the switch control code **91** and **92** includes a switch tag **93** specifying the switch control code, an effective range **94** in the display screen within which the switch is capable of being actuated, an operation mode **95** specifying the function of the switch, and a target designation **96** for specifying a target to be driven by the switch output The function of the switch specified by the operation mode **95** includes making the switch as a monentarily actuated switch or alternately actuated bistable switch, for example, and also making the switch output as a command for changing the pages on the display **32.** When the operation mode **95** is set to make the switch output as the command for changing the pages, the target designation **96** specifies the page of the visual information. Otherwise, the target designation **96** specifies the device **50** to be controlled by PLC **40.**

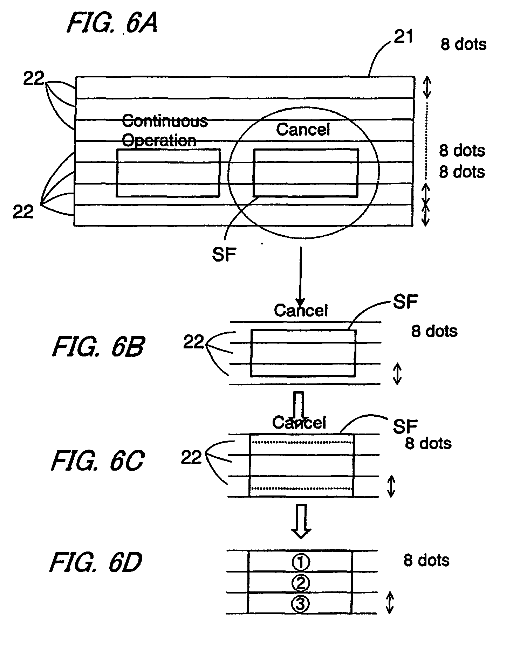

Referring to FIGS. 6A to 6E, the present invention employs a unique scheme of resizing the bitmapped image for the rectangular switch frame into a suitable format and transferring the resized bitmapped image to the memory **34** of the touch screen unit **30** so that the controller section **31** can reproduce the bitmapped image on the display **32** at a high speed. When the visual information includes the rectangular switch frames **SF** as shown in FIG. 6A, the image design tool **20** analyzes the size of the bitmapped image for the rectangular frame **SF** and resize the switch frame **SF** when transferring the bitmapped image to the touch screen unit **30.** The image design tool **20** provides a screen area **21** for drawing the visual information therein. The screen area **21** is divided into a plurality of elongated unit zones or bands **22** each having a unit width of eight (8) dots, as shown in FIG 6A. When, for example, the switch frame **SF** labeled "Cancel" is made to have a width not corresponding to an integer multiple of the unit width, i.e., have the upper and lower sides of rectangular switch frame **SF** disposed between the borders of the bands **22,** as shown in FIG. 6B, the image design tool **20** adds extra blank spaces in the rectangular switch frame **SF** to such an extent that the upper and lower sides of the rectangular frame are in registration with the borders of the bands **22.** Thus, the rectangular switch frame **SF** is resized to have a width which is an integer multiple of the unit width, as indicated by the solid lines in FIG. **6C.** The resized rectangular switch frame **SF** is divided into segments ①, ②, and ③ each having the unit width, as shown in FIG **6D.** Then, the resized rectangular switch frame **SF** is transferred in the form of the divided segments to the memory **34** of the touch screen unit **30.** In this manner, since the rectangular switch frame is resized so as to be divided into the segments of unit width, the controller section **31** of the touch screen unit **30** is capable of expanding the switch frame from the memory segment by segment and therefore assuring a high speed reproduction of the switch frame on the display **32** of the touch screen unit **30.**

The memory 34 is configured to have a basic memory area storing all the data transmitted from the image design tool **20,** and have additional areas, namely, the virtual image area and an actual image area. The virtual image area has a size greater than a screen size of the display **32,** while the actual image area has a size equal to the screen size of the display **32.** In this connection, the screen area available at the image design tool **20** for drawing the visual information is made to have a size slightly greater than the screen size of the display **32** for giving design flexibility. The bitmapped image stored in the basic memory area is loaded to the virtual image area to give a virtual image of the bitmapped image. The virtual image is then loaded into the actual image area where it is trimmed into an actual image fitted in the screen size.
Thereafter, the controller section **31** transfers the actual image to the display **32** for reproduction of the actual image thereat. In this manner, only the image within the screen size can be simply transferred from the memory without resorting to laborious procedure of checking over-reached portion of the image and making proportional resizing of the entire image, thereby enabling immediate reproduction of the visual information on the display only at an expense of canceling the over-reached portion around the virtual image.

## Claims

1. A system for designing visual information reproduced on a monitor unit utilized in combination with a programmable logic controller (PLC), said system comprising:
an image design tool operating on a personal computer; and
said monitor unit connected to said PLC which executes a program for controlling an operation of a device coupled to said PLC,
said monitor unit including a display, a memory, and a control section for controlling the operation of said monitor unit;
said display giving thereon task information to be performed by the device managed by the PLC, and including a touch screen for entry of a specific instruction to be carried out by the PLC for control of said device,
said image design tool creating a source display code for displaying said visual information on said display,
said image design tool being provided with a conversion means for translating said source display code into a corresponding bitmapped image and exporting said bitmapped image to the memory of said monitor unit for immediate reproduction of said visual information on said display,
said monitor unit being provided with a memory for storing the bitmapped image,
said image design tool having means for drawing a plurality of rectangular frames to be included in said visual information, each rectangular frame being written in said source display code which is translated by said conversion means into a corresponding bitmapped image for reproduction on said display, said conversion means storing said bitmapped image for each said rectangular frame in said memory.

2. The system as set forth in claim 1, wherein
said monitor unit includes the touch screen switch on said display for generating a switch output to said PLC in response to a user's action of touching a particular area on said display,
said image design tool having a means of creating a switch control code for defining said switch output, and a transfer means of transferring said switch control code to the memory of said monitor unit, and
said control section of said monitor unit processing said switch control code stored in said memory in order to associate said switch output to a particular function of said PLC for control of said device connected to said PLC.

3. The system as set forth in claim 2, wherein
said transfer means feeds said source display code to the memory of said touch screen unit,
said image design tool further including a retrieve means for retrieving said source display code and said switch control code back from said memory for modification of said visual information and said switch control code at said image design tool,
said image design tool transferring, to said memory, the source display code and the bitmapped image with regard to individual visual information to be displayed on plural pages of said display, and
said retrieving means retrieving, from the memory, the source display code and the switch control code with regard to each of said pages.

4. The system as set forth in claim 1, wherein
said image design tool has a screen area for drawing said visual information therein, said screen area being divided into a plurality of unit zones extending in parallel with each other and having a length and a unit width defined by a fixed number of dots,
said image design tool having a means of drawing a rectangular frame to be included in said visual information, said rectangular frame being written in said source display code which is translated by said conversion means into a corresponding bitmapped image for reproduction on said display,
said image design tool having a reshaping means of resizing the bitmapped image of said rectangular frame into a modified rectangular frame having a width equal to an integer multiple of said unit width, dividing said modified rectangular frame into one or more segments each having the unit width, and transferring said one or more segments to the memory of said monitor unit so as to be recombined on said display to reproduce said modified rectangular frame.

5. The system as set forth in claim 2, wherein
said image design tool has a screen area for drawing said visual information therein, said screen area being divided into a plurality of unit zones extending in parallel with each other and having a length and a unit width defined by a fixed number of dots,
said image design tool having a means of drawing a rectangular frame to be included in said visual information and of defining said rectangular frame as corresponding to a touch sensitive part said touch screen switch, said rectangular frame being written in said source display code which is translated by said conversion means into a corresponding bitmapped image for reproduction on said display,
said image design tool having a reshaping means of resizing the bitmapped image of said rectangular frame into a modified rectangular frame having a width equal to an integer multiple of said unit width, dividing said modified rectangular frame into one or more segments having the unit width, and transferring said one or more segments to the memory of said monitor unit so as to be recombined on said display to reproduce said modified rectangular frame.

6. The system as set forth in claim 1, wherein
said image design tool has capability of selecting a particular linguistic code from a set of different linguistic codes so as to create said visual information by using a string of characters according to the selected linguistic code, and of including an identifier of identifying the selected linguistic code into said source display code such that, when the source display code is retrieved from the memory of said monitor unit to said image design tool, the string of the characters of the selected linguistic code is reproduced on said image design tool.

7. The system as set forth in claim 1, wherein
the memory of said monitor unit comprises:
a virtual image area which has a size greater than a screen size given to said display and in which said bitmapped image is loaded to give a virtual image of said bitmapped image, and
an actual image area which has a size equal to the screen size of said display and which trims said virtual image from said virtual image area into an actual image fitted in the screen size and stores said actual image;
said controller section of the monitor unit executing to transfer said actual image from said actual image area to said display.

## Patentansprüche

1. Ein System zum Entwerfen von visueller Information, die auf einer Monitoreinheit wiedergegeben wird, die in Kombination mit einer programmierbaren logischen Steuerung (PLC) verwendet wird, wobei das System aufweist:
ein Bildentwurfswerkzeug, das auf einem Personalcomputer betrieben wird; und wobei die Monitoreinheit mit der PLC verbunden ist, die ein Programm zum Steuern eines Betriebs einer Vorrichtung, die mit der PLC gekoppelt ist, ausführt, wobei
die Monitoreinheit eine Bildanzeige, einen Speicher und einen Steuerungsabschnitt zum Steuern des Betriebs der Monitoreinheit umfaßt; wobei
die Bildanzeige darauf Tätigkeitsangaben liefert, die durch die Vorrichtung, die durch die PLC verwaltet wird, ausgeführt werden sollen, und einen Berührungsbildschirm für eine Eingabe eines speziellen Befehls umfaßt, der durch die PLC zur Steuerung der Vorrichtung auszuführen ist; wobei
das Bildentwurfswerkzeug einen Bildanzeigequellcode zum Anzeigen der visuellen Information auf der Bildanzeige erzeugt, wobei
das Bildentwurfswerkzeug mit einem Umwandlungsmittel zum Übersetzen des Bildanzeigequellcodes in ein entsprechendes Bild im Bitmapformat versehen ist, und wobei das Bild im Bitmapformat zu dem Speicher der Monitoreinheit für eine unmittelbare Wiedergabe der visuellen Information auf der Bildanzeige exportiert wird,
wobei die Monitoreinheit mit einem Speicher zum Speichern des Bildes im Bitmapformat versehen ist, wobei
das Bildentwurfswerkzeug Mittel zum Zeichnen einer Mehrzahl rechtwinkliger Rahmen aufweist, die in der visuellen Information enthalten sein sollen, wobei jeder rechtwinklige Rahmen in dem Bildanzeigequellcode geschrieben ist, der durch das Umwandlungsmittel in ein entsprechendes Bild im Bitmapformat für eine Wiedergabe auf der Bildanzeige übersetzt wird, wobei das Umwandlungsmittel das Bild für jeden rechtwinkligen Rahmen in dem Speicher im Bitmapformat speichert.

2. System nach Anspruch 1, wobei
die Monitoreinheit den Berührungsbildschirmschalter auf der Bildanzeige umfaßt zum Erzeugen einer Umschaltungsausgabe zur PLC in Reaktion auf ein Berühren eines bestimmten Bereichs auf der Bildanzeige durch einen Benutzer, wobei
das Bildentwurfswerkzeug Mittel zum Erzeugen eines Umschaltungssteuerungscodes zum Definieren der Umschaltungsausgabe und ein Transfermittel zum Transferieren des Umschaltungssteuerungscodes zum Speicher der Monitoreinheit aufweist, und wobei
der Steuerungsabschnitt der Monitoreinheit den Umschaltungssteuerungscode, der im Speicher gespeichert ist, bearbeitet, um die Umschaltungsausgabe einer speziellen Funktion der PLC zur Steuerung der Vorrichtung, die mit der PLC verbunden ist, zuzuordnen.

3. System nach Anspruch 2, wobei
das Transfermittel den Bildanzeigequellcode zum Speicher der Berührungsbildschirmeinheit zuführt, wobei
das Bildentwurfswerkzeug des weiteren ein Wiedergewinnungsmittel zum Wiedergewinnen des Bildanzeigequellcodes und des Umschaltungssteuerungscodes aus dem Speicher zurück umfaßt zum Modifizieren der visuellen Information und des Umschaltungssteuerungscodes beim Bildentwurfswerkzeug, wobei
das Bildentwufswerkzeug den Bildanzeigequellcode und das Bild im Bitmapformat mit Bezug zu individueller visueller Information zum Speicher überträgt, die auf mehreren Seiten der Bildanzeige anzuzeigen ist, und wobei das Wiedergewinnungsmittel aus dem Speicher den Bildanzeigequellcode und den Umschaltungssteuerungscode mit Bezug zu jeder der Seiten wiedergewinnt.

4. System nach Anspruch 1, wobei
das Bildentwurfswerkzeug einen Bildschirmbereich zum Zeichnen der visuellen Information darin aufweist, wobei der Bildschirmbereich in eine Mehrzahl von Einheitszonen unterteilt ist, die sich parallel zueinander erstrecken und eine Länge und eine Einheitsbreite aufweisen, die durch eine feste Anzahl von Punkten definiert sind, wobei
das Bildentwurfswerkzeug ein Mittel zum Zeichnen eines rechtwinkligen Rahmens aufweist, der in der visuellen Information enthalten sein soll, wobei der rechtwinklige Rahmen in dem Bildanzeigequellcode geschrieben ist, der durch das Umwandlungsmittel in ein entsprechendes Bild im Bitmapformat zur Wiedergabe auf der Bildanzeige übersetzt ist, wobei
das Bildentwurfswerkzeug ein Neuformungsmittel für ein Anpassen in der Größe des Bildes im Bitmapformat des rechtwinkligen Rahmens an einen modifizierten rechtwinkligen Rahmen aufweist, der eine Breite aufweist, die gleich einem ganzzahligen Vielfachen der Einheitsbreite ist, wobei der modifizierte rechtwinklige Rahmen in eines oder mehrere Segmente unterteilt wird, wovon jedes die Einheitsbreite aufweist, und wobei das eine oder die mehreren Segmente zu dem Speicher der Monitoreinheit übertragen werden, um auf der Bildanzeige rekombiniert zu werden, um den modifizierten rechtwinkligen Rahmen zu reproduzieren.

5. System nach Anspruch 2, wobei
das Bildentwurfswerkzeug einen Bildschirmbereich zum Zeichnen der visuellen Information darin aufweist, wobei der Bildschirmbereich in eine Mehrzahl von Einheitszonen unterteilt ist, die sich parallel zueinander erstrecken und eine Länge und eine Einheitsbreite aufweisen, die durch eine feste Anzahl von Punkten definiert sind, wobei
das Bildentwurfswerkzeug ein Mittel zum Zeichnen eines rechteckigen Rahmens, der in der visuellen Information enthalten sein soll, und zum Definieren des rechtwinkligen Rahmens entsprechend einem berührungssensitiven Teil des Berührungsbildschirmschalters. aufweist, wobei der rechtwinklige Rahmen in dem Bildanzeigequellcode geschrieben ist, der durch das Umwandlungsmittel in ein entsprechendes Bild im Bitmapformat für eine Reproduktion in eines oder mehrere Segmente unterteilt wird, welche die Einheitsbreite aufweisen, und wobei das eine oder die mehreren Segmente zu dem Speicher der Monitoreinheit übertragen werden, um auf der Bildanzeige rekombiniert zu werden, um den modifizierten rechtwinkligen Rahmen zu reproduzieren.

6. System nach Anspruch 1, wobei
das Bildentwurfswerkzeug dazu geeignet ist, einen speziellen linguistischen Code aus einem Satz verschiedener linguistischer Codes auszuwählen, um die visuelle Information durch Verwenden eines Strings von Zeichen entsprechend dem gewählten linguistischen Code zu erzeugen, und ein Identifikationsmittel für ein Identifizieren des ausgewählten linguistischen Codes im Bildanzeigequellcode zu umfassen, derart, daß, wenn der Bildanzeigequellcode aus dem Speicher der Monitoreinheit zu dem Bildentwurfswerkzeug wiedergewonnen ist, der String der Zeichen des ausgewählten linguistischen Codes auf dem Bildentwurfswerkzeug reproduziert wird.

7. System nach Anspruch 1, wobei der Speicher der Monitoreinheit aufweist:
einen virtuellen Bildbereich, der eine Größe aufweist, die größer ist als die Bildschirmgröße, die der Bildanzeige gegeben wurde, und in den das Bild im Bitmapformat geladen wird, um ein virtuelles Bild des Bildes im Bitmapformat zu liefern, und
einen tatsächlichen Bildbereich, der eine Größe aufweist, die gleich der Bildschirmgröße der Bildanzeige ist, und der das virtuelle Bild aus dem virtuellen Bildbereich an ein tatsächliches Bild anpaßt, das an die Bildschirmgröße angepaßt ist, und der das tatsächliche Bild speichert; wobei
der Steuerungsabschnitt der Monitoreinheit tätig wird, um das tatsächliche Bild von dem tatsächlichen Bildbereich zur Bildanzeige zur Übertragen.

## Revendications

1. Système de conception d'informations visuelles affichées sur une unité de contrôle utilisée en combinaison à un automate programmable (PLC), ledit système comprenant :
un outil de conception d'image fonctionnant sur un ordinateur personnel, et
ladite unité de contrôle connectée audit automate programmable (PLC) qui exécute un programme pour commander une opération d'un dispositif couplé audit PLC,
ladite unité de contrôle comprenant un écran, une mémoire, et une section de commande pour commander le fonctionnement de ladite unité de contrôle,
ledit écran donnant des informations de tâche devant être réalisées par le dispositif géré par le PLC, et comprenant un écran tactile pour entrer une instruction spécifique devant être réalisée par le PCL pour commander ledit dispositif,
ledit outil de conception d'image créant un code d'affichage source pour afficher lesdites informations visuelles sur ledit écran,
ledit outil de conception d'image étant fourni avec un moyen de conversion pour traduire ledit code d'affichage source en une image pixelisée correspondante et exporter ladite image pixelisée dans la mémoire de ladite unité de contrôle pour reproduction immédiate desdites informations visuelles sur ledit écran,
ladite unité de contrôle étant dotée d'une mémoire pour stocker l'image pixelisée,
ledit outil de conception d'image possédant un moyen pour dessiner une pluralité de cadres rectangulaires devant être inclus dans lesdites informations visuelles, chaque cadre rectangulaire étant écrit dans ledit code d'affichage source qui est traduit par ledit moyen de conversion en une image pixelisée correspondante pour reproduction sur ledit écran, ledit moyen de conversion stockant ladite image pixelisée pour chaque dit cadre rectangulaire dans ladite mémoire.

2. Système selon la revendication 1, dans lequel
ladite unité de contrôle comprend le commutateur d'écran tactile sur ledit écran pour générer une sortie de commutateur sur ledit PLC en réponse à une action de toucher par l'utilisateur d'une zone donnée sur ledit écran,
ledit outil de conception d'image possédant un moyen de création d'un code de commande de commutateur pour définir ladite sortie de commutateur, et un moyen de transfert pour transférer ledit code de commande de commutateur sur la mémoire de ladite unité de contrôle, et
ladite section de commande de ladite unité de contrôle traitant ledit code de commande de commutateur stocké dans ladite mémoire afin d'associer ladite sortie de commutateur à une fonction donnée dudit PLC pour commander ledit dispositif relié audit PLC.

3. Système selon la revendication 2, dans lequel
ledit moyen de transfert conduit ledit code d'affichage source à la mémoire de ladite unité d'écran tactile,
ledit outil de conception d'image comprend en outre un moyen de retrait pour retirer ledit code d'affichage source et ledit code de commande commutateur de ladite mémoire pour modification desdites informations visuelles et dudit code de commande de commutateur sur ledit outil de conception d'image,
ledit outil de conception d'image transférant à ladite mémoire le code d'affichage source et l'image pixelisée en fonction des informations visuelles individuelles devant être affichées sur plusieurs pages dudit écran, et
ledit moyen de retrait retirant de la mémoire le code d'affichage source et le code de commande de commutateur en fonction de chacune desdites pages.

4. Système selon la revendication 1, dans lequel
ledit outil de conception d'image possède une zone d'écran pour dessiner lesdites informations visuelles sur celle-ci, ladite zone d'écran étant divisée en une pluralité de zones unitaires s'étendant en parallèle les unes aux autres et ayant une longueur et une largeur unitaire définies par un nombre fixe de points,
ledit outil de conception d'image ayant un moyen pour dessiner un cadre rectangulaire devant être inclus dans lesdites informations visuelles, ledit cadre rectangulaire étant écrit dans ledit code d'affichage source qui est traduit par ledit moyen de conversion en une image pixelisée correspondante pour reproduction sur ledit écran,
ledit outil de conception d'image ayant un moyen de remise en forme pour redimensionner l'image pixelisée dudit cadre rectangulaire en un cadre rectangulaire modifié ayant une largeur égale à multiple entier de ladite largeur unitaire, divisant ledit cadre rectangulaire modifié en un ou plusieurs segments présentant chacun la largeur unitaire, et transférant lesdits un ou plusieurs segments sur la mémoire de ladite unité de contrôle de manière à ce qu'ils soient recombinés sur ledit écran pour reproduire ledit cadre rectangulaire modifié.

5. Système selon la revendication 2, dans lequel
ledit outil de conception d'image possède une zone d'écran pour dessiner lesdites informations visuelles sur celle-ci, ladite zone d'écran étant divisée en une pluralité de zones unitaires s'étendant en parallèle les unes aux autres et ayant une longueur et une largeur unitaire définies par un nombre fixe de points,
ledit outil de conception d'image ayant un moyen pour dessiner un cadre rectangulaire devant être inclus dans lesdites informations visuelles et pour définir ledit cadre rectangulaire comme correspondant à une partie tactile dudit commutateur d'écran tactile, ledit cadre rectangulaire étant écrit dans ledit code d'affichage source qui est traduit par ledit moyen de conversion en une image pixelisée correspondante pour reproduction sur ledit écran,
ledit outil de conception d'image ayant un moyen de remise en forme pour redimensionner l'image pixelisée dudit cadre rectangulaire en un cadre rectangulaire modifié ayant une largeur égale à multiple entier de ladite largeur unitaire, divisant ledit cadre rectangulaire modifié en un ou plusieurs segments présentant la largeur unitaire, et transférant lesdits un ou plusieurs segments sur la mémoire de ladite unité de contrôle de manière à ce qu'ils soient recombinés sur ledit écran pour reproduire ledit cadre rectangulaire modifié.

6. Système selon la revendication 1, dans lequel
ledit outil de conception d'image a la capacité de sélectionner un code linguistique donné depuis un ensemble de codes linguistiques différents afin de créer lesdites informations visuelles en utilisant une chaîne de caractères selon le code linguistique sélectionné, et d'inclure un identificateur d'identification du code linguistique sélectionné dans ledit code d'affichage source de manière à ce que, lorsque le code d'affichage source est retiré de la mémoire de ladite unité de contrôle sur ledit outil de conception d'image, la chaîne de caractères du code linguistique sélectionné soit reproduite sur l'outil de conception d'image.

7. Système selon la revendication 1, dans lequel
la mémoire de ladite unité de contrôle comprend :
une zone d'image virtuelle qui a une taille supérieure à une taille d'écran donnée audit écran et dans laquelle ladite image pixelisée est chargée pour donner une image virtuelle de ladite image pixelisée, et
une zone d'image réelle qui a une taille égale à la taille d'écran dudit écran et qui découpe ladite image virtuelle depuis ladite zone d'image virtuelle en une image réelle ajustée dans la taille d'écran et stocke ladite image réelle ;
ladite section de commande de l'unité de contrôle réalisant le transfert de ladite image réelle depuis ladite zone d'image réelle sur ledit écran.
